# EUROPEAN PATENT SPECIFICATION

(11) **EP 1 460 923 B1**
(45) Date of publication and mention of the grant of the patent: **12.09.2007**
(21) Application number: 03740881.2
(22) Date of filing: 04.07.2003
(51) Int. Cl.: A47L 9/18, B01D 50/00

(54) **SUCTION AND FILTERING APPARATUS**
SAUG- UND FILTERGERÄT
APPAREIL D'ASPIRATION ET DE FILTRAGE

(30) Priority: 05.07.2002 IT UD20020152
(43) Date of publication of application: 29.09.2004
(73) Proprietor: De'Longhi SpA, 31100 Treviso (IT)
(72) Inventor: DI PIAZZA, Giorgio, I-30100 FAVARO VENETO (IT); SCIAN, Luciano, I-33084 CORDENONS (IT)
(74) Representative: Petraz, Gilberto Luigi
(86) International application number: PCT/IB2003/002652
(87) International publication number: WO 2004/004536

(56) References cited:
- EP-A- 0 768 058
- DE-A- 10 060 858
- DE-A- 19 858 562
- DE-U- 9 105 213
- US-A- 4 676 811
- PATENT ABSTRACTS OF JAPAN vol. 1996, no. 09, 30 September 1996 (1996-09-30) & JP 08 112226 A (MOTODA ELECTRON CO LTD), 7 May 1996 (1996-05-07) cited in the application
- PATENT ABSTRACTS OF JAPAN vol. 2002, no. 02, 2 April 2002 (2002-04-02) & JP 2001 286422 A (SHIMIZU YOSHIO), 16 October 2001 (2001-10-16)

## Description

### FIELD OF THE INVENTION

The present invention concerns an air suction and filtering apparatus wherein the air sucked in is filtered of the dust and solid particles by means of a dry filter and a liquid bath filter. The two filters are arranged in series and a mixing chamber is made between them, in which the air, after being partly filtered in the dry filter, is mixed with a jet of clean water. The mixture of air and water thus obtained is conveyed into the liquid bath filter to make even the finer dust, which is more difficult to capture, precipitate therein.

### BACKGROUND OF THE INVENTION

A suction and filtering apparatus is known, comprising a liquid bath filter containing water and, downstream, a dry filter.

A suction motor is arranged downstream of the dry filter. In this way the motor is able to generate a flow to suck in the air and dust between an inlet and an outlet of the filtering apparatus, so that the air passes first in the water contained in the liquid bath filter and then in the dry filter.

This known apparatus has the disadvantage, however, that the air and finer dust, which do not deposit in the liquid bath filter, are partly dampened by the water contained therein.

The dampened air and dust unfortunately dampen the dry filter too, and damage it, with the risk that the efficiency of its filtering power can be diminished.

Moreover, the dampened air and dust also cause the formation of damp deposits, which are difficult to remove, in the zone of passage between the liquid bath filter and the dry filter.

US-A-4,676,811 discloses a cleaning apparatus comprising a first hermetic container containing a liquid, such as water. A second container, smaller than the first, is arranged inside the first container and is open on the bottom in order to allow the liquid to enter it too. The air to be cleaned enters the second container, where a second liquid is sprayed onto the air itself in order to dampen the solid particles, making them heavy and causing them to fall into the liquid on the bottom of the first container. The already dampened air exits from the second container and enters the first container through a Venturi-type scrubber, which is provided with a nozzle that sprays the already dampened air and in which the particles, before being sprayed, are further dampened in order to facilitate their fall into the water in the first container. The air introduced into the first container then flows above the liquid, passes through a pre-filter and, through a particulate air filter, comes out through a fan, as clean air.

In this known apparatus too the particles are separated from the air first by using a damp method, by means of sprays of liquid, and, subsequently, using a dry method, by means of the pre-filter and the filter. In this case too, the previously described disadvantages occur.

The Japanese patent application JP-A-08-112226 discloses a cleaning apparatus comprising, on the head side, a portion to suck in the dust, which is connected to a suction pump through an intermediate channel. A dry filter, consisting of a metal net and of a non-woven fabric, and a first portion to collect the dust captured by the dry filter are inserted into a first half of the intermediate channel, while a liquid bath filter, with water or a water solution, is inserted into the second half of the intermediate channel and constitutes a second portion to collect the dust. This document forms the basis for the preamble of independent claim 1.

In this cleaning apparatus the air sucked in is therefore filtered in the first half of the intermediate channel by means of a dry filter, and in the second half of the intermediate channel by means of a liquid bath filter. This known apparatus has the disadvantage, however, that, in the intermediate zone between the dry filter and the liquid bath filter, the air sucked in is in no way made heavier, or dampened, in order to encourage the dust to fall through gravity into the liquid bath.

From DE-U-9105213 it is known a cleaning apparatus wherein a first dry filter is provided to perform a first filtering of the air. The air filtered by the first dry filter is then mixed with water injected in an intermediate cylindrical pipe by means of a Venturi tube. Then, the mixture of air and water is introduced tangentially into the upper part of a second vertical cyclone filter, wherein, in the lower part, a liquid bath is provided. The filtered air exits from an upper outlet of the second vortical cyclone filter, while the water should flow downwards to the lower liquid bath. This known cleaning apparatus does not provides for any actual liquid bath filter, even if a liquid bath reservoir is provided in the lower part of the second cyclone filter.

Applicant has devised and embodied the present invention to overcome these shortcomings of the state of the art and to obtain further advantages.

### SUMMARY OF THE INVENTION

The present invention is set forth and characterized essentially in the main claim, while the dependent claims describe other innovative characteristics of the invention.

One purpose of the invention is to achieve an air suction and filtering apparatus by means of which it is possible to completely separate the dust and the solid particles sucked in together with the air and, at the same time, to prevent the formation of unwanted deposits of said dust and solid particles.

Another purpose of the present invention is to achieve a suction and filtering apparatus wherein, at a first moment, the larger dust can be separated in a dry filter and, at a second moment, the finer dust can be separated in a liquid bath filter, and wherein the finer dust is encouraged to fall into the liquid bath filter.

In accordance with these purposes, an air suction and filtering apparatus according to the present invention comprises at least a first filtering unit and a second filtering unit, connected together in series, and air suction means able to create a flow of air between an inlet pipe, through the first filtering unit and, subsequently, through the second filtering unit, and an outlet aperture arranged downstream of the second filtering unit. To be more exact, the first filtering unit comprises a dry filter and the second filtering unit comprises a liquid bath filter. According to the invention, between the first filtering unit and the second filtering unit a mixing chamber is arranged, independent of the two filters, into which the air arriving from the dry filter is able to be conveyed. Moreover, water introduction means are provided, which are connected to the mixing chamber in order to introduce water therein, advantageously under pressure, in order to obtain an air-water mixture able to be conveyed to the liquid bath filter.

Advantageously, the water introduction means are able to create a vortical motion of the water in the mixing chamber, so as to facilitate the nebulization of the water and the absorption of the finer particles.

The apparatus according to the invention thus allows to separate the heaviest and/or largest particles in the dry filter, and subsequently, in the mixing chamber, to dampen the air with an injection of water, making the finer particles heavier, so as to encourage them to fall into the liquid bath filter.

With the apparatus according to the invention it is also possible to prevent the formation of deposits of damp dirt. In fact, the water to be introduced and mixed with the air sucked in arriving from the dry filter cleans the zones of passage of the air between the dry filter and the liquid bath filter.

The type of dry filter is not restricted in the field of the present invention. The dry filter can comprise for example a cyclone filter, a membrane filter or a net filter, a bag filter, filtering cloths or otherwise.

In one form of embodiment, the mixing chamber for the air and water is substantially cylindrical in shape, or shaped like a truncated cone, and is defined by an inner lateral wall, an outer lateral wall and a circular wall. The chamber is connected by means of respective inlet and outlet pipes, on the one side to the dry filter and on the other side to the liquid bath filter.

Advantageously both the water introduction means to introduce the water into the mixing chamber and also the inlet pipe to introduce the air arriving from the dry filter are arranged in proximity with the circular wall, so that both the water and the air are fed in a peripheral zone of the mixing chamber along the circular wall. On the contrary, the outlet pipe, which conveys the mixture of water outside the mixing chamber towards the liquid bath filter, is made in a central zone on one of the two lateral walls of the chamber itself. This configuration allows the formation of the aforementioned vortical motion of the mixture of air-water, from the peripheral zone towards the central zone of the mixing chamber.

According to a first embodiment, in order to induce the formation of said vortical motion, the water is introduced into the mixing chamber according to a trajectory that is tangential with respect to the circular wall of the mixing chamber.

According to a variant, inside the mixing chamber, in correspondence with the zone where the water, and respectively the air, is introduced, diversion elements are made, with a curved shape, such as platelets, fins or suchlike, which are able to induce a circular vortical motion of the mixture towards the central zone of the mixing chamber.

The water to be mixed can be taken both from a tank that is separate from the liquid bath filter and directly from the liquid bath filter itself. In this case the water contained in the liquid bath is suitably filtered before being injected again against the air sucked in.

Another purpose of the present invention is to obtain a suction and filtering apparatus of a multi-functional type, which can be used even only to dry filter the dust of a relatively large size, as in the case of crumbs or suchlike, or to suck in only liquids.

In accordance with this purpose, the suction and filtering apparatus according to the present invention comprises a by-pass pipe able to put the first filtering unit in direct connection with the suction means.

Closing means are provided to isolate the mixing chamber and to selectively open the by-pass pipe, in order to convey the flow of air directly to the suction means and then to the outlet aperture of the apparatus.

### BRIEF DESCRIPTION OF THE DRAWINGS

These and other characteristics of the present invention will become apparent from the following description of a preferential form of embodiment, given as a non-restrictive example, with reference to the attached drawings wherein:
- fig. 1 is a three-dimensional view, partly in section, of a suction and filtering apparatus according to the present invention;
- fig. 2 is another three-dimensional view of the apparatus in fig. 1;
- fig. 3 is a view from above of the apparatus in fig. 1;
- fig. 4 shows a detail of the apparatus in fig. 1 in a first operating condition;
- fig. 5 shows the detail in fig. 4 in a second operating condition;
- fig. 6 is a part view of a variant of the apparatus in fig. 1;
- fig. 7 shows a variant of a detail of the apparatus in fig. 1.

### DETAILED DESCRIPTION OF A PREFERENTIAL FORM OF EMBODIMENT OF THE INVENTION

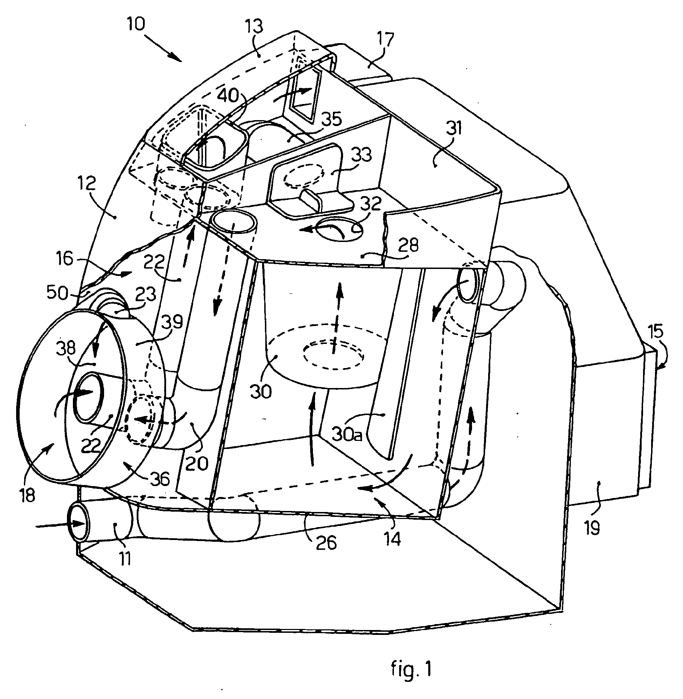

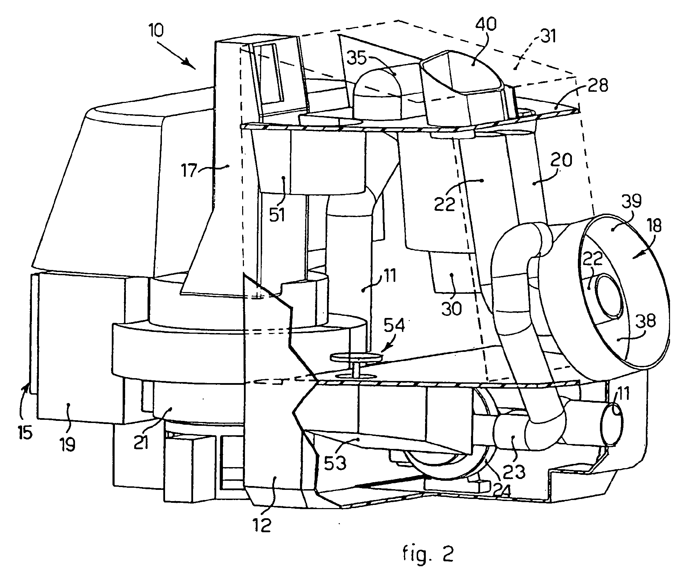

With reference to the figs. 1 and 2, a suction and filtering apparatus 10 according to the present invention comprises an inlet pipe 11 for the introduction of the air sucked in, an outlet aperture 15 for the filtered air and a suction motor 21 arranged between the inlet pipe 11 and the outlet aperture 15 in order to create a corresponding flow of air.

The apparatus 10 also comprises a tank 12, closed at the top by means of a cover 13, inside which a first filtering unit is made, comprising a dry filter 14, and a second filtering unit, comprising a liquid bath filter, or water filter 16. The latter is connected to the suction motor 21 by means of an intermediate pipe 17. Between the suction motor 21 and the outlet aperture 15 there is also a unit to expel the air 19, provided with another filter device of a known type, for example a HEPA filter.

According to a characteristic of the present invention, the apparatus 10 also comprises a mixing chamber 18, independent of the water filter 16 and the dry filter 14, into which water is able to be injected, to be mixed with the air arriving from the dry filter. The mixing chamber 18 is connected, in this case, to the dry filter 14, by means of an inlet pipe 20 and is in communication with the water filter 16 by means of an outlet pipe 22.

In this embodiment of the invention, the water to be injected into the mixing chamber 18 is taken directly from the water filter 16, through a water introduction pipe 23, by means of a feed pump 24.

The dry filter 14 comprises a first container 26, which can be removed from the tank 12, connected at the rear with the inlet pipe 11 and closed at the top by a separating wall 28.

Inside the first container 26 there is a filtering body 30, tubular in shape, holed inside and attached at the top to the separating wall 28. A vertical wall 30a is attached to one side of the filtering body 30 and is arranged, in this case, opposite the entrance to the inlet pipe 11.

In this way, as it enters the first container 26, the air hits the vertical wall 30a and causes the heavier and coarser particles to precipitate onto the bottom of the first container 26.

The separating wall 28, with the cover 13 of the tank 12, defines an expansion chamber 31 for the air, which communicates on one side with the dry filter 14, by means of a through hole 32, and on the other side with the mixing chamber 18, by means of the inlet pipe 20. The through hole 32 is made in a central zone of the separating wall 28 in correspondence with the filtering body 30 below, so as to allow the air to pass into the expansion chamber 31, after dry filtering.

According to a characteristic of the present invention, the expansion chamber 31 can be put into communication directly with the suction motor 21, by means of a bypass 35 open towards the second filtering unit, so as to exclude the mixing chamber 18 from the suction path.

This solution is particularly useful in the event that it is sufficient to filter the air only with the dry filter, for example when crumbs or similar particles are sucked in.

To be more exact, above the separating wall 28 there is a shutter 33 able to slide linearly backwards and forwards between two operating positions.

In a forward operating position, not shown in the drawings, the shutter 33 closes the inlet pipe 20 and isolates the mixing chamber 18 from the flow of air in order to thus obtain a dry filtering of the air only. In correspondence with the forward operating position, the feed pump 24 is advantageously switched off.

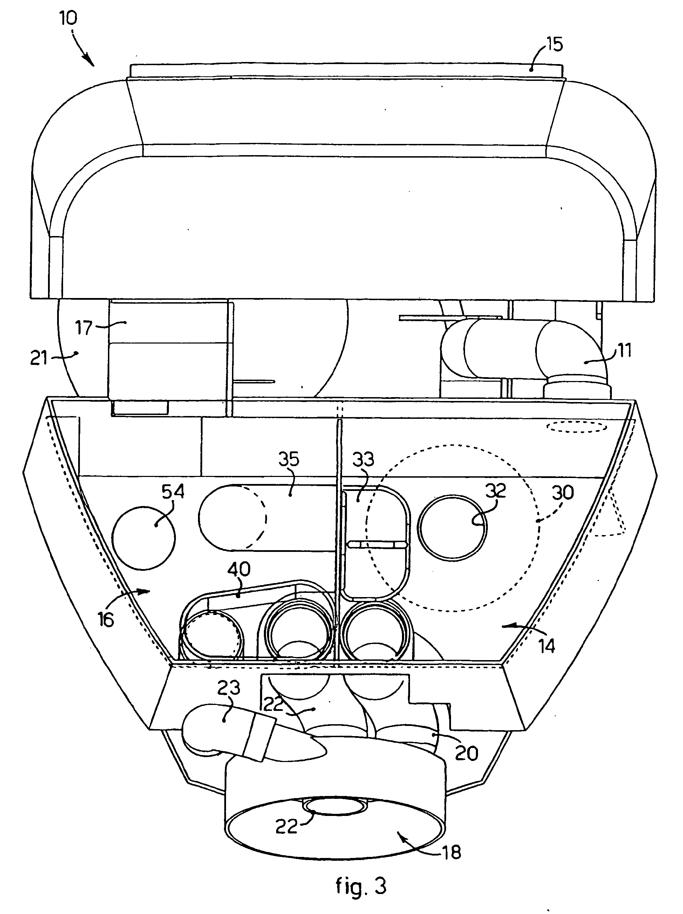

In a retracted operating position, shown in figs. 1 and 3, the shutter 33 closes the by-pass 35 and keeps the expansion chamber 31 in communication with the mixing chamber 18, by means of the inlet pipe 20, in order to obtain a mixed type of filtering, that is to say, by means of which, after the air has been dry filtered of the coarser and heavier dust, it is mixed with water in the mixing chamber 18 in order to be subsequently filtered in the water filter 16.

The mixing chamber 18 is made inside a cylindrical box-like body 36, which is arranged at the front of the tank 12 and comprises an inner lateral wall 38, an outer lateral wall, not shown in the drawings, and a cylindrical or circular wall 39.

The outlet pipe 22 couples into a central zone of the inner lateral wall 38 and its upper end is connected with the water filter 16 by means of a joint 40.

In the embodiment shown in figs. 1-3, the water introduction pipe 23 couples into an upper zone of the cylindrical wall 39, in a substantially horizontal manner, so as to introduce the water into the mixing chamber 18 in a direction substantially tangential to the cylindrical wall 39.

The jet of water thus introduced mixes with the air entering into the lower zone of the mixing chamber 18 from the inlet pipe 20, forming a vortex which extends from the periphery towards the center of the mixing chamber 18 and is sucked in through the outlet pipe 22, to fall in a cascade into the water filter 16.

The formation of the vortex facilitates the nebulization of the water and allows a greater absorption of the fine dust in the water.

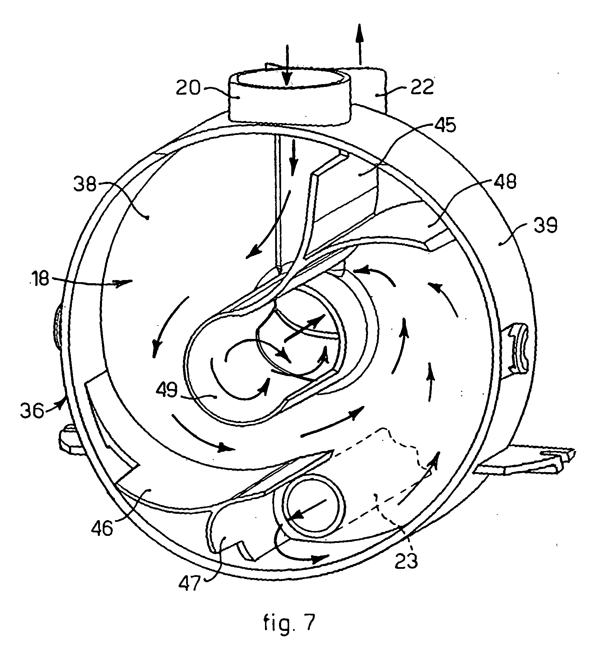

According to a variant shown in fig. 7, the water introduction pipe 23 couples into the lower zone of the inner wall 38 of the mixing chamber 18, while the inlet pipe 20 for the air arriving from the dry filter 14 couples into the cylindrical wall 39 in an upper zone of the mixing chamber 18.

Inside the mixing chamber 18 there is a first diversion element 45, curved, which is arranged in proximity with the zone where the air enters the mixing chamber 18 in order to induce a circular motion of the air towards the lower zone where there is a second diversion element 46, which diverts the air upwards again.

The second diversion element 46 is joined in one piece with a third diversion element 47 which is arranged in proximity with the inlet zone of the water pumped inside the mixing chamber 18. The water is sucked in due to the Venturi effect by the circulating air and is diverted upwards by the third diversion element 47, according to a circular trajectory, mixing with the air itself.

The mixture of air and water is diverted, finally, by a fourth diversion element 48 towards the center of the mixing chamber 18 where there is a tubular element 49, partly open, where the mixture forms a vortex which extends as far as into the outlet pipe 22, and then falls, in this embodiment too, in a cascade into the water filter 16.

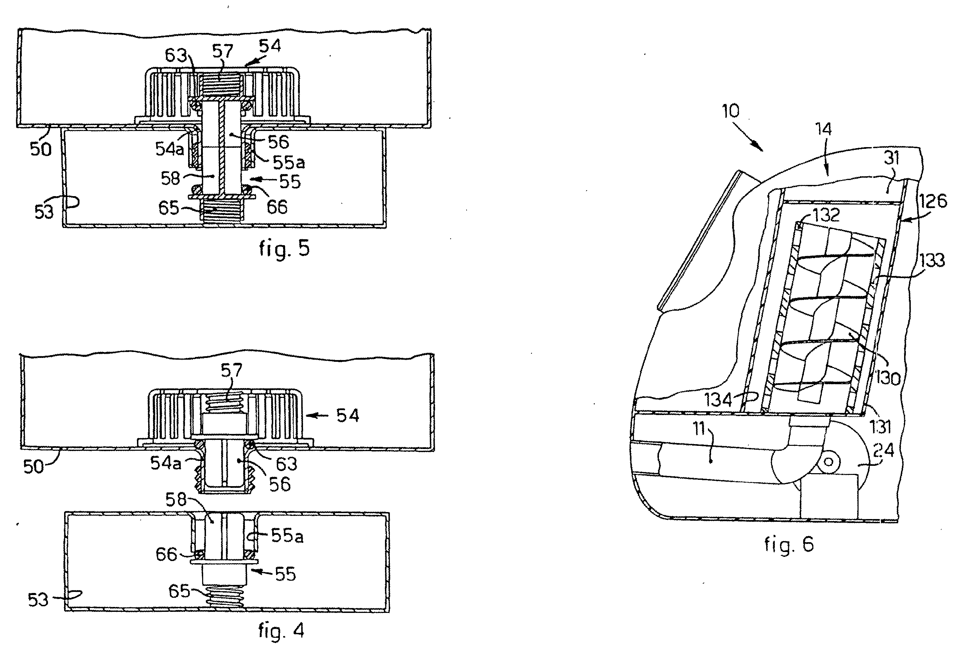

The water filter 16 comprises a second container 50 (figs. 4 and 5) for water, also removable from the tank 12 and connected at the upper part with the intermediate pipe 17 and at the lower part with the mixing chamber 18 by means of the water introduction pipe 23.

To be more exact, upstream of the intermediate pipe 17 a seating 51 is attached for a safety float of a known type, not shown in the drawings, which is able to block the suction motor 21 in the event that the water level inside the second container 50 has reached a maximum level.

Under the second container 50, moreover, in correspondence with the point where it connects with the feed pump 24, there is a chamber 53 (figs. 2, 4 and 5), communicating with the latter.

The connection between the chamber 53 and the bottom of the container 50 is obtained by means of a pair of spring valves 54 and 55, which normally block the flow of water when the second container 50 is removed from the tank 12.

The valve 54 comprises a tubular body 54a inside which a first rod 56 is able to slide, with a cross-shaped transverse section and able to be inserted in abutment in a mating tubular compartment 55a of the valve 55, inside which a second rod 58 is able to slide, also with a cross-shaped transverse section.

Two helical springs 57 and 65 keep the rods 56 and 58 in a forward position, in which the valves 54 and 55 are in a closed position, with their sealing packings 63 and 66 thrust against the respective tubular bodies 54a and 55a.

When the container 50 is inserted into the tank 12 (fig. 5), the abutment coupling of the tubular body 54a in the compartment 55a causes a compression in opposite directions of the respective springs 57 and 65 and the consequent opening of the passage of flow of water into the chamber 53 through the inter-spaces defined by the empty spaces of the cross-shaped rods 56 and 58.

According to another characteristic of the present invention, the apparatus 10 as described heretofore can also be used only to suck in liquids.

For this use the filtering body 30 is removed from the respective container 26 and the latter is used simply as a collection container for the liquids sucked in like the container 50 of the liquid bath filter 16.

The door 33 is positioned in its forward operating position and the feed pump 24 is de-activated.

When the suction motor 21 is driven, the liquids to be sucked in are momentarily collected in the first container 26 and subsequently in the second container 50. When the level of liquids collected in the second container 50 reaches the maximum level, the safety float blocks the suction motor 21 and therefore the whole apparatus 10.

It is clear, however, that modifications and/or additions of parts may be made to the suction and filtering apparatus 10 as described heretofore without departing from the field and scope of the present invention.

According to a variant, the dry filter 14 comprises a propeller element 130 (fig. 6), which is contained in a first container 126 connected at the lower part with the inlet pipe 11.

The first container 126 is substantially cylindrical in shape and comprises an outer wall 131 and an inner wall 132, coaxial to the outer wall 131 and in which through holes 133 are made. The inner wall 132 is attached, at a set distance, from the outer wall 131 and defines therewith an intermediate compartment 134.

The propeller element 130 is able to induce a cyclonic motion in the air and in the solid particles sucked in with it, in order to obtain a first dry filtering of the air.

The heavier particles, in fact, having a greater speed, are thrust due to centrifugal force through the holes 133 against the outer wall 131 and are deposited, falling into the intermediate compartment 134, on the bottom of the container 126.

The lighter particles, instead, are drawn with the air into the expansion chamber 31, made above the dry filter 14.

It is also clear that, although the present invention has been described with reference to specific examples, the person of skill in the art shall certainly be able to embody many other equivalent forms of suction and filtering apparatus, all of which shall come within the field and scope of the present invention as set out in the claims.

## Claims

1. Air suction and filtering apparatus, comprising a first filtering unit (14) and a second filtering unit (16), connected together in series, and suction means (21) able to create a flow of air between an inlet pipe (11), through said first filtering unit (14) and, subsequently, said second filtering unit (16), and an outlet aperture (15) arranged downstream of said second filtering unit (16), wherein said first filtering unit (14) comprises a dry filter, and said second filtering unit (16) comprises a liquid bath filter containing a liquid, **characterized in that** between said first filtering unit (14) and said second filtering unit (16) a mixing chamber (18) is arranged, independent of said first and second filtering units (14, 16), into which the air arriving from said first filtering unit (14) is able to be conveyed, **in that** water introduction means (23) are provided, which are connected to said mixing chamber (18) and are able to introduce water therein in order to obtain, in said mixing chamber (18), an air-water mixture able to be conveyed into said second filtering unit (16), and **in that** said water introduction means (23) are able to introduce the water under pressure so as to create a vortical motion in said mixing chamber (18).

2. Apparatus as in claim 1, **characterized in that** said mixing chamber (18) is made in a box-like body (36), substantially cylindrical in shape, or shaped like a truncated cone, and comprising at least a circular wall (39), and **in that** said water introduction means (23) are able to introduce the water in a direction substantially tangential with respect to said circular wall (39), in order to induce said vortical motion of the water in said mixing chamber (18).

3. Apparatus as in claim 2, **characterized in that** said mixing chamber (18) is connected to said first filtering unit (14) by first conveyor means (20) for the inlet of air, and to said second filtering unit (16) by second conveyor means (22) for the outlet of said air-water mixture, **in that** said first conveyor means (20) and said water introduction means (23) are able to introduce, respectively, the air and the water into a peripheral zone of said mixing chamber (18) along said circular wall (39) of said box-like body (36), and **in that** said second conveyor means (22) are arranged in a central zone of said mixing chamber (18), so that said vortical motion is induced in said mixing chamber (18) from said peripheral zone towards said central zone.

4. Apparatus as in claim 3, **characterized in that** inside said mixing chamber (18) there are diversion elements (45, 46, 47, 48), able to divert the flow of air and water according to a substantially circular trajectory from said peripheral zone towards said central zone of said mixing chamber (18).

5. Apparatus as in claim **4**, **characterized in that** said diversion elements comprise first diversion elements (45) arranged in correspondence with the zone where the air enters said mixing chamber (18) and second diversion elements (47) arranged in correspondence with the zone where the water is introduced into said mixing chamber (18).

6. Apparatus as in claim 3, **characterized in that** said water introduction means (23) connect said mixing chamber (18) with said second filtering unit (16) and **in that** feed means (24) are provided in order to convey under pressure into said mixing chamber (18) the liquid contained in said second filtering unit (16), to be mixed with the air.

7. Apparatus as in any claim hereinbefore, **characterized in that** said first filtering unit (14) comprises a fabric, a net, a filtering cloth, a propeller element or other dry filter element, able to filter the air of relatively heavy and large particles.

8. Apparatus as in claims 3 and **7**, **characterized in that** the propeller element (130) is mounted vertically inside a container (126), which is connected on one side to said inlet pipe (11) and on the other side to said first conveyor means (20).

9. Apparatus as in any claim hereinbefore, **characterized in that** it comprises a by-pass pipe (35) arranged between said first filtering unit (14) and said suction means (21) and able to convey the air directly towards said outlet aperture (15), excluding said second filtering unit (16) from the path of the suction flow.

10. Apparatus as in claims 3 and **9, characterized in that** said by-pass pipe (35) is connected on the one side to said first filtering unit (14) and on the other side to said suction means (21) and **in that** closing means (33) are provided to selectively close said by-pass (35) or said first conveyor means (20), in order to alternately convey the air to said outlet aperture (15) or to said mixing chamber (18).

11. Apparatus as in claim **6,** comprising a containing tank (12) for at least said second filtering unit (16), **characterized in that** said second filtering unit (16) comprises a container (50), removable from said tank (12) and **in that** valve means (54, 55) are arranged between said container (50) and said water introduction means (23) to allow the liquid to be conveyed to the mixing chamber (18), when said container (50) is arranged inside said tank (12).

## Patentansprüche

1. Luftsaug- und -Filtervorrichtung, die eine erste Filtereinheit (14) und eine zweite Filtereinheit (16), die in Reihe miteinander verbunden sind, und eine Saugeinrichtung (21), die in der Lage ist, eine Luftströmung zwischen einem Einlassrohr (11), durch die erste Filtereinheit (14) und darauf folgend die zweite Filtereinheit (16) und eine Auslassöffnung (15), die ausströmseitig der zweiten Filtereinheit (16) angeordnet ist, zu erzeugen, aufweist, wobei die erste Filtereinheit (14) einen Trockenfilter aufweist und die zweite Filtereinheit (16) einen Flüssigkeitsbadfilter, der eine Flüssigkeit enthält, aufweist, **dadurch gekennzeichnet, dass** zwischen der ersten Filtereinheit (14) und der zweiten Filtereinheit (16) eine Mischkammer (18), unabhängig der ersten und der zweiten Filtereinheit (14, 16), angeordnet ist, in die die Luft, die von der ersten Filtereinheit (14) ankommt, befördert werden kann, dass Wasser-Einführeinrichtungen (23) vorgesehen sind, die mit der Mischkammer (18) verbunden sind und dazu geeignet sind, Wasser darin einzuführen, um, in der Mischkammer (18), eine Luft-Wasser-Mischung zu erhalten, die in die zweite Filtereinheit (16) befördert werden kann, und dass die Wasser-Einführeinrichtungen (23) dazu geeignet sind, das Wasser unter Druck so einzuführen, um eine Wirbelbewegung in der Mischkammer (18) zu erzeugen.

2. Vorrichtung nach Anspruch 1, **dadurch gekennzeichnet, dass** die Mischkammer (18) aus einem kastenähnlichen Gehäuse (36), das im Wesentlichen in der Form zylindrisch ist, oder ähnlich eines Kegelstumpfs gebildet ist, gebildet ist und mindestens eine kreisförmige Wand (39) aufweist, und dass die Wasser-Einführeinrichtungen (23) dazu geeignet sind, das Wasser in einer Richtung im Wesentlichen tangential in Bezug auf die kreisförmige Wand (39) einzuführen, um die Wirbelbewegung des Wassers in der Mischkammer (18) einzuleiten.

3. Vorrichtung nach Anspruch 2, **dadurch gekennzeichnet, dass** die Mischkammer (18) mit der ersten Filtereinheit (14) durch eine erste Fördereinrichtung (20) für den Einlass von Luft und mit der zweiten Filtereinheit (16) durch eine zweite Fördereinrichtung (22) für den Auslass der Luft-Wasser-Mischung verbunden ist, dass die erste Fördereinrichtung (20) und die Wasser-Einführeinrichtungen (23) dazu geeignet sind, jeweils die Luft und das Wasser in eine Umfangszone der Mischkammer (18) entlang der kreisförmigen Wand (39) des kastenähnlichen Gehäuses (36) einzuführen, und dass die zweite Fördereinrichtung (22) in einer zentralen Zone der Mischkammer (18) so angeordnet ist, dass die Wirbelbewegung in der Mischkammer (18) von der Umfangszone zu der zentralen Zone hin eingeleitet wird.

4. Vorrichtung nach Anspruch 3, **dadurch gekennzeichnet, dass** innerhalb der Mischkammer (18) Ablenkelemente (45, 46, 47, 48) vorgesehen sind, die dazu geeignet sind, die Strömung aus Luft und Wasser entsprechend einer im Wesentlichen kreisförmigen Bahn von der Umfangszone zu der zentralen Zone der Mischkammer (18) hin abzulenken.

5. Vorrichtung nach Anspruch 4, **dadurch gekennzeichnet, dass** die Ablenkelemente erste Ablenkelemente (45), die entsprechend der Zone angeordnet sind, wo die Luft in die Mischkammer (18) eintritt, und zweite Ablenkelemente (47), die entsprechend der Zone, wo das Wasser in die Mischkammer (18) eingeführt wird, angeordnet sind, aufweisen.

6. Vorrichtung nach Anspruch 3, **dadurch gekennzeichnet, dass** die Wasser-Einführeinrichtungen (23) die Mischkammer (18) mit der zweiten Filtereinheit (16) verbinden und dass Zuführeinrichtungen (24) vorgesehen sind, um, unter Druck, die Flüssigkeit in die Mischkammer hinein, die in der zweiten Filtereinheit (16) enthalten ist, zu befördern, damit sie mit der Luft gemischt wird.

7. Vorrichtung nach einem vorhergehenden Anspruch, **dadurch gekennzeichnet, dass** die erste Filtereinheit (14) ein Vlies, ein Netz, einen Filterstoff, ein Propellerelement, oder ein anderes Trockenfilterelement aufweist, das dazu geeignet ist, die Luft von relativ schweren und großen Teilchen zu filtern.

8. Vorrichtung nach den Ansprüchen 3 und 7, **dadurch gekennzeichnet, dass** das Propellerelement (130) vertikal innerhalb eines Behälters (126) befestigt ist, der an einer Seite mit dem Einlassrohr (11) und an der anderen Seite mit der ersten Fördereinrichtung (20) verbunden ist.

9. Vorrichtung nach einem vorhergehenden Anspruch, **dadurch gekennzeichnet, dass** sie ein Bypassrohr (35), das zwischen der ersten Filtereinheit (14) und der Saugeinrichtung (21) angeordnet ist und dazu geeignet ist, die Luft direkt zu der Auslassöffnung (15) zu befördern, wobei die zweite Filtereinheit (18) von dem Weg der Saugströmung herausgenommen ist, aufweist.

10. Vorrichtung nach den Ansprüchen 3 und 9, **dadurch gekennzeichnet, dass** ein Bypassrohr (35) an der einen Seite mit der ersten Filtereinheit (14) und an der anderen Seite mit der Saugeinrichtung (21) verbunden ist und dass Verschließeinrichtungen (33) vorgesehen sind, um wahlweise den Bypass (35) oder die erste Fördereinrichtung (20) zu verschließen, um alternierend die Luft zu der Auslassöffnung (15) oder zu der Mischkammer (18) zu befördern.

11. Vorrichtung nach Anspruch 6, die einen Aufnahmetank (12) für zumindest die zweite Filtereinheit (16) aufweist, **dadurch gekennzeichnet, dass** die zweite Filtereinheit (16) einen Behälter (50), der von dem Tank (12) entfernbar ist, aufweist, und dass Ventileinrichtungen (54, 55) zwischen dem Behälter (50) und den Wasser-Einführeinrichtungen (23) angeordnet sind, um zu ermöglichen, dass die Flüssigkeit zu der Mischkammer (18) befördert werden kann, wenn der Behälter (50) innerhalb des Tanks (12) angeordnet ist.

## Revendications

1. - Appareil d'aspiration et de filtrage d'air, comprenant une première unité de filtrage (14) et une deuxième unité de filtrage (16) reliées en série entre elles, et des moyens d'aspiration (21) aptes à créer, à travers ladite première unité de filtrage (14) et, dans la suite, ladite deuxième unité de filtrage (16), un écoulement d'air entre un conduit d'entrée (11) et une ouverture de sortie (15) disposée en aval de ladite deuxième unité de filtrage (16), ladite première unité de filtrage (14) comprenant un filtre à sec et ladite deuxième unité de filtrage (16) comprenant un filtre à bain de liquide contenant un liquide, **caractérisé en ce que** entre ladite première unité de filtrage (14) et ladite deuxième unité de filtrage (16) est disposée une chambre de mélange (18) indépendante desdites première et deuxième unités de filtrage (14, 16), dans laquelle est apte à être canalisé l'air venant de ladite première unité de filtrage (14), **en ce que** sont prévus des moyens d'amenée (23) d'eau, lesquels sont reliés à ladite chambre de mélange (18) et sont aptes à y amener de l'eau afin d'obtenir, dans ladite chambre de mélange (18), un mélange d'air et d'eau apte à être canalisé dans ladite deuxième unité de filtrage (16), et **en ce que** lesdits moyens d'amenée (23) d'eau sont aptes à amener l'eau sous pression, de façon à créer un mouvement tourbillonnaire dans ladite chambre de mélange (18).

2. - Appareil selon la revendication 1, **caractérisé en ce que** ladite chambre de mélange (18) est réalisée dans un corps en caisson (36) fondamentalement en forme de cylindre ou en forme de tronc de cône et comprenant au moins une paroi circulaire (39), et **en ce que** lesdits moyens d'amenée (23) d'eau sont aptes à amener l'eau selon une direction fondamentalement tangentielle par rapport à ladite paroi circulaire (39), de façon à provoquer ledit mouvement tourbillonnaire de l'eau dans ladite chambre de mélange (18).

3. - Appareil selon la revendication 2, **caractérisé en ce que** ladite chambre de mélange (18) est reliée à ladite première unité de filtrage (14) par de premiers moyens de canalisation (20) pour l'entrée de l'air, et à ladite deuxième unité de filtrage (16) par de deuxièmes moyens de canalisation (22) pour la sortie dudit mélange d'air et d'eau, **en ce que** lesdits premiers moyens de canalisation (20) et lesdits moyens d'amenée (23) d'eau sont aptes à amener respectivement l'air et l'eau dans une zone périphérique de ladite chambre de mélange (18) le long de ladite paroi circulaire (39) dudit corps en caisson (36), et **en ce que** lesdits deuxièmes moyens de canalisation (22) sont disposés dans une zone centrale de ladite chambre de mélange (18), de façon à provoquer dans ladite chambre de mélange (18) ledit mouvement tourbillonnaire de ladite zone périphérique vers ladite zone centrale.

4. - Appareil selon la revendication 3, **caractérisé en ce que** à l'intérieur de ladite chambre de mélange (18) il y a des éléments déviateurs (45, 46, 47, 48) aptes à dévier l'écoulement d'air et d'eau selon une trajectoire fondamentalement circulaire, de ladite zone périphérique vers ladite zone centrale de ladite chambre de mélange (18).

5. - Appareil selon la revendication 4, **caractérisé en ce que** lesdits éléments déviateurs comprennent de premiers éléments déviateurs (45) disposés en regard de la zone d'entrée de l'air dans ladite chambre de mélange (18) et de deuxièmes éléments déviateurs (47) disposés en regard de la zone d'amenée de l'eau dans ladite chambre de mélange (18).

6. - Appareil selon la revendication 3, **caractérisé en ce que** lesdits moyens d'amenée (23) d'eau relient ladite chambre de mélange (18) à ladite deuxième unité de filtrage (16), et **en ce que** des moyens d'alimentation (24) sont prévus pour canaliser sous pression dans ladite chambre de mélange (18) le liquide contenu dans ladite deuxième unité de filtrage (16), afin de le mélanger avec l'air.

7. - Appareil selon l'une ou l'autre des revendications précédentes, **caractérisé en ce que** ladite première unité de filtrage (14) comprend un tissu, un filet, un drap filtrant, un élément hélicoïdal ou un autre élément de filtrage à sec, apte à filtrer l'air des particules relativement lourdes ou de grandes dimensions.

8. - Appareil selon les revendications 3 et 7, **caractérisé en ce que** l'élément hélicoïdal (130) est monté verticalement à l'intérieur d'un récipient (126), qui est relié d'une partie audit conduit d'entrée (11) et de l'autre partie auxdits premiers moyens de canalisation (20).

9. - Appareil selon l'une ou l'autre des revendications précédentes, **caractérisé en ce qu'**il comprend un conduit by-pass (35) disposé entre ladite première unité de filtrage (14) et lesdits moyens d'aspiration (21) et apte à canaliser l'air directement vers ladite ouverture de sortie (15), ladite deuxième unité de filtrage (16) étant exclue du parcours de l'écoulement d'aspiration.

10. - Appareil selon les revendications 3 et 9, **caractérisé en ce que** ledit conduit by-pass (35) est relié d'une partie à ladite première unité de filtrage (14) et de l'autre partie auxdits moyens d'aspiration (21), et **en ce que** des moyens obturateurs (33) sont prévus pour fermer sélectivement ledit by-pass (35) ou lesdits premiers moyens de canalisation (20), pour canaliser alternativement l'air vers ladite ouverture de sortie (15) ou ladite chambre de mélange (18).

11. - Appareil selon la revendication 6, comprenant un réservoir (12) pour contenir au moins ladite deuxième unité de filtrage (16), **caractérisé en ce que** ladite deuxième unité de filtrage (16) comprend un récipient (50) extractible dudit réservoir (12), et **en ce que** des moyens à soupape (54, 55) sont disposés entre ledit récipient (50) et lesdits moyens d'amenée (23) d'eau pour permettre la canalisation du liquide dans la chambre de mélange (18), quand ledit récipient (50) est disposé à l'intérieur dudit réservoir (12).
